# FASCICULE DE BREVET EUROPEEN

(11) **EP 3 386 782 B1**
(45) Date de publication et mention de la délivrance du brevet: **15.07.2020**
(21) Numéro de dépôt: 16809510.7
(22) Date de dépôt: 21.11.2016
(51) Int. Cl.: B60G 21/05

(54) **ESSIEU ARRIÈRE DE VÉHICULE AUTOMOBILE COMPORTANT DES MOYENS DE RETENUE POUR AMÉLIORER LA LIAISON PAR COLLAGE D'UNE TRAVERSE EN MATÉRIAU COMPOSITE AVEC LES BRAS**
HINTERACHSE EINES KRAFTFAHRZEUGS MIT HALTEMITTELN ZUR VERBESSERUNG DER KLEBEVERBINDUNG EINES VERBUNDMATERIALQUERTRÄGERS MIT DEN ARMEN
REAR AXLE OF A MOTOR VEHICLE COMPRISING HOLDING MEANS FOR IMPROVING THE ADHESIVE BOND OF A COMPOSITE MATERIAL CROSSMEMBER WITH THE ARMS

(30) Priorité: 08.12.2015 FR 1561972
(43) Date de publication de la demande: 17.10.2018
(73) Titulaire: Renault S.A.S., 92100 Boulogne-Billancourt (FR)
(72) Inventeur: ROLLET, Remi, 91190 Gif-sur-Yvette (FR)
(86) Numéro de dépôt international: PCT/FR2016/053026
(87) Numéro de publication internationale: WO 2017/098103

(56) Documents cités:
- DE-A1- 19 603 764
- FR-A1- 2 822 104
- FR-A1- 2 888 559
- FR-A1- 2 908 347
- FR-A1- 3 015 372

## Description

### DOMAINE TECHNIQUE DE L'INVENTION

La présente invention concerne un essieu arrière de véhicule automobile comportant des moyens de retenue pour améliorer la liaison par collage d'une traverse en matériau composite avec les bras.

La présente invention concerne plus particulièrement un essieu arrière de véhicule automobile comportant deux bras de support des roues, d'orientation longitudinale, qui comportent chacun un alésage, une traverse tubulaire en matériau composite, d'orientation transversale et deux tronçons d'extrémité respectivement fixés, par une liaison par collage, dans les alésages des bras longitudinaux de support des roues.

### ÉTAT DE LA TECHNIQUE

Dans un véhicule automobile, le train arrière comporte généralement un essieu qui assure la liaison avec les roues du véhicule. L'essieu semi-rigide est un type d'essieu couramment utilisé, qui équipe les véhicules de tourisme légers et économiques.

De manière connue, un essieu semi-rigide comporte au moins deux bras longitudinaux qui sont reliés transversalement par une poutre qui, formant une barre de torsion, est aussi appelée traverse. Un tel essieu est par exemple connu de DE19603764.

Les bras comportent chacun une extrémité qui, longitudinalement à l'avant, est montée pivotante sur le châssis du véhicule.

Les bras comportent chacun une autre extrémité, longitudinalement à l'arrière, qui porte une roue arrière du véhicule.

La traverse s'étend sensiblement transversalement entre les deux bras. Chaque tronçon d'extrémité de la traverse est fixé à un bras associé, entre les extrémités de celui-ci.

Dans certaines situations de roulage du véhicule, les bras de l'essieu se déplacent en rotation par rapport au châssis du véhicule de manière indépendante, comme par exemple lorsque le véhicule est sur un terrain en devers ou dans un virage.

Ce déplacement en rotation d'un bras relativement à l'autre bras provoque alors une torsion de la traverse qui est reliée de manière fixe aux deux bras.

La traverse remplie une fonction anti-devers de limitation du roulis du véhicule. Pour cela une traverse d'essieu semi-rigide doit répondre aux contraintes suivantes, d'une part, être rigide en flexion et, d'autre part, être déformable élastiquement en torsion. Ces contraintes se reportent notamment sur la conception et le choix des matériaux utilisés dans la fabrication de la traverse.

Par ailleurs, le principal avantage d'un essieu semi-rigide est d'offrir une conception au comportement mécanique satisfaisant tout en proposant une solution économique et légère.

Il est connu de réaliser les bras longitudinaux d'un essieu semi-rigide en métal, et notamment en aluminium. L'utilisation de métaux tels que l'aluminium permet de répondre aux contraintes de résistance mécanique tout en réduisant considérablement le poids total de l'essieu.

Les bras sont avantageusement associés avec une traverse tubulaire en matériau composite, par exemple avec une matrice polyamide, pour réduire le poids de l'essieu.

La traverse est, par exemple, réalisée avec des inserts de différentes compositions qui lui permettent de garder les caractéristiques mécaniques voulues tout en proposant un poids total considérablement réduit par rapport à une traverse en métal.

Selon une solution connue, la traverse en matériau composite peut être équipée d'une ouverture (ou échancrure) qui, s'étend transversalement sur au moins une partie de la traverse, est destinée à réduire sa raideur en torsion.

L'ouverture est par exemple positionnée le long de la traverse et dimensionnée en fonction des caractéristiques mécaniques voulues de la traverse. La traverse obtenue présente avantageusement un poids minimum, pour un comportement mécanique optimum.

En revanche, l'utilisation d'une traverse en matériau composite ne permet pas d'adopter des solutions de fixation similaires à celles d'une traverse en métal, tel que le soudage.

C'est la raison pour laquelle, on utilise une fixation par collage pour lier les tronçons d'extrémité d'une traverse en matériau composite avec chacun des bras de l'essieu, de préférence réalisés en aluminium.

Si la liaison par collage est avantageusement légère et peu couteuse, une telle fixation présente néanmoins des inconvénients, tout particulièrement lorsque la traverse en matériau composite comporte une ouverture s'étendant transversalement sur au moins une partie de la traverse.

En fonctionnement, lorsqu'un effort de torsion est appliqué à la traverse, les bords opposés de l'ouverture ont tendances à glisser transversalement dans deux directions opposées, provoquant ainsi un déformation en vrille du tronçon de traverse comportant l'ouverture.

Lorsque l'encoche ne s'étend pas jusqu'aux tronçons d'extrémité de la traverse, c'est-à-dire lorsque les tronçons d'extrémité de la traverse présentent un profil fermé, cette déformation en vrille est contenue mais toutefois pas totalement éliminée. Dans le prolongement de l'ouverture, l'un des bord a tendance à tirer transversalement le tronçon d'extrémité vers l'extérieur de son logement, tandis que l'autre bord de l'ouverture a tendance à pousser le tronçon d'extrémité vers le fond de son logement. Sou l'effet de ces deux efforts de sens contraire, il se produit donc, notamment dans le prolongement de l'ouverture, l'apparition de contraintes de cisaillement transversal dans les tronçons d'extrémité. Lorsqu'elle devient trop élevée, cette contrainte de cisaillement risque d'endommager le tronçon d'extrémité, notamment en créant une fissure dans le prolongement de l'ouverture.

Par ailleurs, lorsque l'ouverture s'étend sur la totalité de la traverse, soit par conception, soit du fait de la présence d'une fissure, la déformation en vrille de la traverse s'étend au tronçon d'extrémité. Selon le même principe qu'expliqué précédemment, la déformation en vrille de la traverse provoque l'apparition d'une contrainte de cisaillement dans la couche de colle interposée entre le tronçon d'extrémité et le logement. La liaison par collage est alors susceptible d'être affectée entrainant une fragilité de l'essieu, voire une fatigue prématurée pouvant aller jusqu'à la rupture de la liaison par collage ayant pour conséquence première la perte de rigidité en torsion de l'essieu.

La présente invention vise notamment à proposer une solution permettant de conserver tous les avantages d'un essieu de type semi-rigide comportant une traverse en matériau composite munie d'une ouverture transversale, tout en réduisant tout ou partie des inconvénients exposés précédemment.

Le but de l'invention est tout particulièrement d'améliorer la tenue de la liaison de fixation, par encollage, entre la traverse en matériau composite et les bras de l'essieu.

Dans ce but, l'invention propose une solution permettant de réduire la déformation en vrille de la traverse au niveau de la liaison par collage entre la traverse et les bras de l'essieu de manière à limiter la déformation en cisaillement de la traverse.

### BREF RESUME DE L'INVENTION

L'invention concerne un essieu arrière de véhicule automobile comportant deux bras de support des roues, d'orientation longitudinale, qui comportent chacun un alésage, une traverse tubulaire en matériau composite, d'orientation transversale, qui comporte au moins une ouverture d'orientation transversale, et deux tronçons d'extrémité respectivement fixés par une liaison par collage dans les alésages des bras longitudinaux de support des roues, caractérisé en ce que l'essieu comporte des moyens de retenue pour transmettre un effort de cisaillement transversal produit par la traverse sous l'effet d'une contrainte de torsion jusqu'au bras.

L'invention permet de conserver les avantages d'un essieu comportant des bras en métal, par exemple en aluminium, respectivement associés à une traverse en matériau composite et fixés avec ladite traverse par une liaison par collage. L'invention s'applique notamment aux traverses comportant une ouverture.

Avantageusement, les moyens de retenue permettent de réduire les conséquences du mouvement de vrille de la traverse au niveau de la liaison par collage avec les bras et ce faisant de transmettre les efforts de cisaillement provoqués lors de la déformation de la traverse au bras. L'effort de cisaillement est entièrement encaissé par le bras qui est réalisé en un matériau métallique présentant une grande résistance à la rupture.

Grâce aux moyens de retenue selon l'invention, on améliore la tenue de la liaison par collage entre la traverse et les bras de support des roues du véhicule de l'essieu.

Selon d'autres caractéristiques de l'invention :
- les moyens de retenue comportent au moins un taraudage dans chaque alésage des bras de support des roues ;
- chaque tronçon d'extrémité de la traverse comporte un filetage complémentaire du taraudage du bras de support associé ;
- le filetage à un tronçon d'extrémité de la traverse présente un pas de sens opposé au filetage que comporte l'autre tronçon d'extrémité de la traverse ;
- les filetages de la traverse et les taraudages complémentaires des bras de support sont coniques ;
- les alésages traversent les bras de support ;
- l'essieu comporte au moins un cylindre d'expansion emmanché dans chaque tronçon d'extrémité de la traverse, pour comprimer radialement le tronçon d'extrémité de la traverse contre les moyens de retenue ;
- l'alésage des bras de support est broché de manière à former des crans anti-rotation ;
- la traverse comporte au moins une ouverture d'orientation transversale.

L'invention concerne aussi, un procédé de réalisation d'un essieu suivant selon les enseignements de l'invention, caractérisé en ce qu'il comporte au moins les étapes suivantes :
- encoller le taraudage du bras de support de roue ;
- introduire le tronçon d'extrémité de la traverse dans l'alésage taraudé ;
- engager le cylindre d'expansion transversalement dans le tronçon d'extrémité de la traverse.

Selon une autre caractéristique le procédé comporte une étape consistant à chauffer le tronçon d'extrémité de la traverse, cette étape intervenant préalablement à l'étape d'engagement du cylindre d'expansion.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

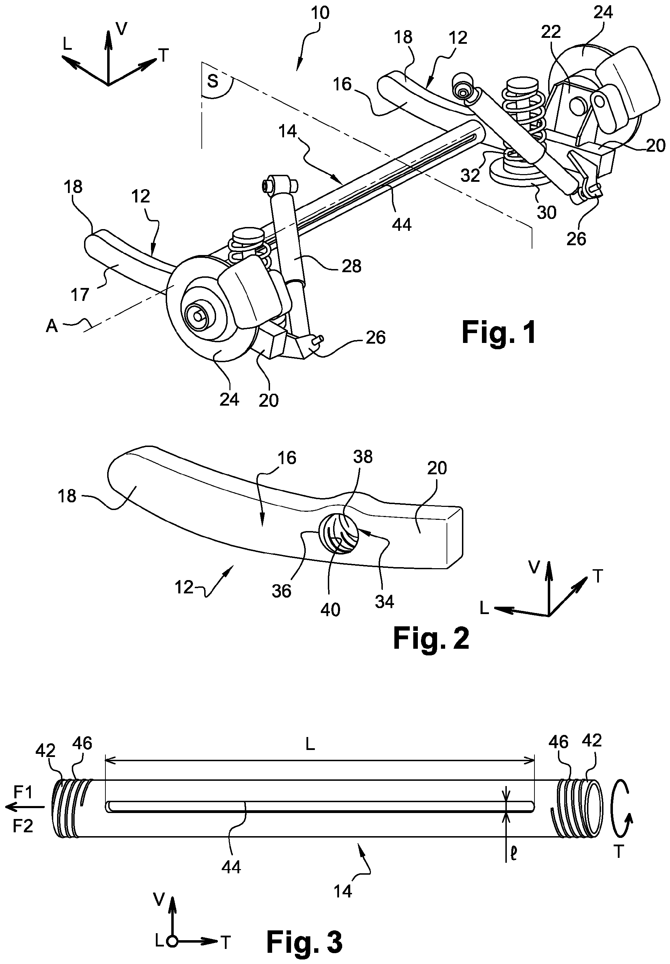

- la figure 1 est une vue en perspective qui représente un exemple de réalisation d'un essieu arrière de véhicule automobile et qui illustre un premier mode de réalisation de l'invention ;
- la figure 2 est une vue schématique en perspective qui représente un des bras de support de roues d'un essieu selon la figure 1 et qui illustre un alésage d'un bras complémentaire de l'un des filetages de la traverse et formant une partie des moyens de retenue selon le premier mode de réalisation de l'invention ;
- la figure 3 est une vue schématique en perspective qui représente une traverse d'un essieu selon la figure 1 et qui illustre les filetages formant une autre partie des moyens de retenue selon le premier mode de réalisation ;

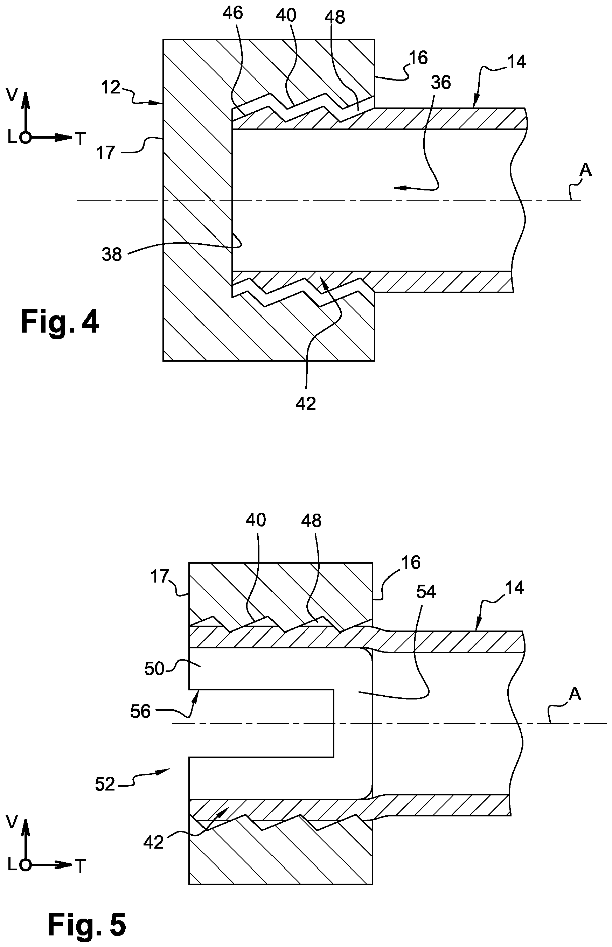

- la figure 4 est une vue en section suivant un plan transversal passant par l'axe de la traverse qui représente la zone de liaison par collage entre l'un des bras et l'un des tronçons d'extrémité de la traverse dans un essieu et qui illustre des moyens de retenue selon le premier mode de réalisation de l'invention ;
- la figure 5 est une vue en section suivant un plan transversal passant par l'axe de la traverse qui représente la zone de liaison par collage entre l'un des bras et l'un des tronçons d'extrémité de la traverse dans un essieu et qui illustre des moyens de retenue selon un deuxième mode de réalisation de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera par convention, à titre non limitatif, des orientations longitudinale, verticale, transversale indiquées par le trièdre (L, V, T) représenté sur les figures.

On a représenté à la figure 1, un essieu 10 arrière de véhicule automobile. Selon l'exemple de réalisation, l'essieu 10 est un essieu de type semi-rigide.

On décrira ci-après, en référence aux figures 1 à 4, un premier mode de réalisation de l'essieu selon l'invention.

L'essieu 10 comporte deux bras 12 de support des roues s'étendant suivant une orientation sensiblement longitudinale. Les bras 12 sont reliés transversalement entre eux par une traverse 14 s'étendant suivant une orientation sensiblement transversale.

L'essieu 10 présente un plan S de symétrie représenté à la figure 1. Le plan S est un plan d'orientation verticale-longitudinale passant transversalement par le milieu de la traverse 14.

Les bras 12 sont agencés symétriquement par rapport au plan S de symétrie, transversalement de part et d'autre de la traverse 14. Compte-tenu de la symétrie de l'essieu 12 suivant le plan S, on décrira par la suite l'un seulement des deux bras 12 et uniquement l'une des liaisons entre le bras 12 et la traverse 14, la description s'appliquant à l'identique à l'autre bras 12 et sa liaison avec la traverse 14.

Le bras 12 est formé par une pièce massive, de préférence réalisée en aluminium. Le bras 12 s'étend dans une direction globalement longitudinale.

Le bras 12 comporte une face 16 latérale interne qui est tournée vers l'autre bras 12, et une face 17 latérale externe opposée.

Le bras 12 comporte longitudinalement une première extrémité 18, orientée en direction de l'avant du véhicule, et une deuxième extrémité 20, orientée en direction de l'arrière du véhicule.

La première extrémité 18 avant du bras 12 est destinée à être montée par une liaison pivot (non représentée) sur un châssis (non représenté) du véhicule.

La deuxième extrémité 20 arrière du bras 12 est munie d'une équerre 22 associée à un disque 24 de frein. L'équerre 22 et le disque 24 de frein sont destinés à supporter une roue (non représentée) du véhicule.

De manière connue, l'essieu 10 comporte une bride 26 solidaire de l'extrémité 20 arrière du bras 12. La bride 26 supporte un élément 28 d'amortisseur du véhicule. L'extrémité 20 arrière du bras 12 comporte une bride 30 pour supporter un organe 32 de suspension du véhicule.

Tel que représenté à la figure 2, le bras 12 comporte un alésage 34. Selon le premier mode de réalisation de l'essieu 10, l'alésage 34 est réalisé dans la face 16 latérale interne du bras 12.

De manière non limitative, l'alésage 34 se situe ici longitudinalement dans la partie arrière du bras 12, plus proche de l'extrémité 20 arrière que de l'extrémité 18 avant.

L'alésage 34 est destiné à loger un tronçon d'extrémité associé de la traverse 14. L'alésage 34 est de forme complémentaire à la section du tronçon d'extrémité de la traverse 14, ici l'alésage 34 présente une face intérieure cylindrique de révolution.

La fixation entre la traverse 14 en matériau composite et le bras 12 de l'essieu 10 est réalisée au moyen d'une liaison par collage. Pour ce faire, une couche 48 de colle est intercalée radialement entre la face cylindrique extérieure du tronçon d'extrémité 42 de la traverse 14 et la face cylindrique intérieure de l'alésage 34 du bras 12. La liaison par collage est plus particulièrement représentée à la figure 4.

L'alésage 34 est ici borgne, c'est-à-dire qu'il comporte une ouverture 36 et un fond 38 plan s'étendant verticalement.

On a représenté à la figure 3 une traverse 14 de l'essieu 10. La traverse 14 présente globalement la forme d'une barre rectiligne d'axe A d'orientation transversale. La traverse est tubulaire, de préférence cylindrique de révolution autour de son axe A.

La traverse 14 est réalisée en matériau composite.

La traverse 14 s'étend transversalement entre les deux bras 12 de l'essieu. Elle comporte deux tronçons d'extrémités 42 destinés à être fixés par collage dans les alésages 34 des bras 12 de support des roues.

La traverse 14 comporte au moins une ouverture 44 (ou échancrure). L'ouverture 44 présente une longueur « L » et une largeur « I » respectivement dimensionnées pour modifier de manière adéquate les propriétés mécaniques élastiques de la traverse 14, tout particulièrement en torsion. L'ouverture 44 est ici orientée verticalement vers le bas de la traverse 14.

Selon les propriétés mécaniques recherchées, la longueur L peut varier jusqu'à une longueur maximale égale à la longueur totale de la traverse 14.

L'ouverture 44 s'étend suivant l'orientation transversale, c'est-à-dire sensiblement parallèlement à l'axe A de la traverse 14 de l'essieu 10.

La traverse 14 est réalisée de manière à être rigide en flexion et de manière à être déformable élastiquement en torsion autour de son axe A.

Comme expliqué en préambule, lorsque l'ouverture 44 ne s'étend pas jusqu'aux tronçons d'extrémité 42, la déformation en vrille du tronçon de traverse 14 comportant l'ouverture 44 est susceptible de transmettre au tronçon d'extrémité 42 des efforts de cisaillement qui sont susceptibles de l'endommager.

Dans le cas d'une ouverture 44 s'étendant sur toute la longueur de la traverse 14, lors des mouvements de torsion de la traverse 14, on a observé que la face cylindrique extérieure de la traverse 14 était susceptible de bouger transversalement par rapport à la face cylindrique intérieure de l'alésage 34. Ceci induit des contraintes de cisaillement dans la couche 48 de colle, risquant de provoquer une rupture de la liaison par collage.

L'invention propose de limiter les contraintes de cisaillement supportées par le tronçon d'extrémité 42 et/ou par la couche 48 de colle en transmettant au moins partiellement ces contraintes de cisaillement au bras 12. Ceci est réalisé en équipant essieu 10 de moyens de retenue mécanique entre le tronçon d'extrémité 42 et l'alésage 34.

Les moyens de retenue comportent des crans portés par la face cylindrique intérieure de l'alésage. Les crans sont délimités par des faces orientées globalement transversalement dans un sens et dans l'autre. Ces crans coopèrent avec des faces portées par la traverse et orientées globalement transversalement en vis-à-vis des crans de l'alésage pour transmettre mécaniquement les efforts de cisaillement transversaux jusqu'au bras en comprimant la couche de colle.

Avantageusement, les moyens de retenue interviennent au niveau de la liaison par collage entre chaque tronçon d'extrémité 42 de la traverse 14 et le bras 12 associé pour limiter les phénomènes de cisaillement et ainsi améliorer la tenue de la liaison de la traverse 14 avec chaque bras 12.

Selon un premier mode de réalisation de l'invention représenté aux figures 2 à 4, les moyens de retenue mécanique sont formés par des crans portés respectivement par l'alésage 34 et par le tronçon d'extrémité 42. Les crans de l'alésage 34 coopèrent par contact mécanique avec les crans du tronçon d'extrémité 42 pour immobiliser transversalement dans les deux sens les crans du tronçon d'extrémité 42 par rapport aux crans de l'alésage. Les crans sont répartis régulièrement autour du tronçon d'extrémité 42 pour empêcher sa déformation en vrille.

Dans le premier mode de réalisation, les moyens de retenue comporte un taraudage 40 qui est réalisé dans l'alésage 34. Le taraudage 40 s'étend transversalement à l'intérieur sur tout ou partie d'une face cylindrique intérieure de l'alésage 34, depuis l'ouverture 36 vers le fond 38.

De préférence, le taraudage 40 s'étend sur toute la profondeur de l'alésage 34 depuis l'ouverture 36 jusqu'au fond 38.

les moyens de retenue comportent aussi un filetage 46 qui est réalisé sur le tronçon 42 d'extrémité associé de la traverse 14. La face cylindrique extérieure de chaque tronçon d'extrémité 42 de la traverse 14 comporte ainsi un filetage 46 complémentaire du taraudage 40 de l'alésage 34 du bras 12 de support de roue.

Les filets du filetage 46 forment les crans portés par le tronçon d'extrémité 42, tandis que les filets du taraudage 40 forment les crans portés par l'alésage 34.

La traverse 14 comporte à un tronçon d'extrémité 42 un filetage 46 présentant un pas de sens opposé au filetage 46 que comporte l'autre tronçon d'extrémité 42 de la traverse 14.

Le tronçon d'extrémité 42 fileté de la traverse 14 est vissé dans le taraudage 40 de l'alésage 34 du bras 12 jusqu'au fond 38 de l'alésage 34.

Etant donné que les pas des filetages 46 des deux tronçons d'extrémité 42 sont inversés, il est aisé de visser simultanément les deux tronçons d'extrémité 42 dans leur bras 12 associé.

Entre le filetage 46 de la traverse 14 et le taraudage 40 de l'alésage 34, une couche 48 de colle est intercalée. La couche 48 de colle permet d'assurer le blocage de la liaison en fixant le taraudage 40 avec le filetage 46.

Lors de l'assemblage de la traverse 14 avec les bras 12 de l'essieu, les filets des taraudages 40 des bras et/ou des filetages 46 de la traverse 14 sont préalablement encollés.

Les deux bras 12 sont disposés de manière à ce que les alésages 34 soient transversalement en vis-à-vis des tronçons d'extrémité 42 de la traverse 14.

Puis, la traverse 14 est mise en rotation. Les tronçons d'extrémité 42 de la traverse 14 sont ainsi vissés simultanément dans les bras 12. La traverse 14 est insérée dans les bras 12 jusqu'au fond des alésages 34.

Avantageusement, pour une meilleure adhérence de la colle, la couche 48 de colle est serrée entre le filetage 46 et le taraudage 40 au moment de l'assemblage.

Ainsi, dans le premier mode de réalisation de l'invention, lesdits moyens de retenue sont constitués par le taraudage 40 réalisé dans l'alésage 34 de chaque bras 12 et par le filetage 46 complémentaire que comporte chaque tronçon d'extrémité 42 de la traverse 14.

On décrira ci-après, en référence aux figures 1 à 4, le fonctionnement de l'essieu 10 comportant des moyens de retenue suivant le premier mode de réalisation.

Lorsque le véhicule comportant l'essieu 10 arrière est en dévers, ou dans d'autres situations de roulage, comme par exemple en situation de sous-virage, les bras 12 de l'essieu 10 pivotent d'un angle différent autour de l'axe de liaison de l'extrémité 18 avant du bras 12 avec le châssis du véhicule. Ceci provoque un mouvement de torsion de la traverse 14, représenté par une flèche T à la figure 3.

Lors du mouvement T de torsion du tronçon d'extrémité 42 de la traverse 14 suivant son axe A, les deux bords transversaux de l'ouverture 44 ont tendance à glisser chacun transversalement dans une direction opposée. On peut schématiser les forces appliquées au tronçon d'extrémité 42 comme un couple de forces F1, F2 transversales de sens opposés dans le prolongement des bords de l'ouverture 44, comme représentées à la figure 3.

Ce couple est responsable d'une déformation de la traverse, qui vrille suivant l'axe A. Il crée l'apparition d'efforts de cisaillement transversal dans le tronçon d'extrémité 42.

L'ensemble filetage 46 et taraudage 40 constituent des moyens de retenue aptes à transmettre les contraintes de cisaillement depuis les tronçons d'extrémité 42 jusqu'aux bras 12. En effet, les filets du filetage 46 appuient transversalement contre les filets du taraudage 40 pour transmettre la totalité de la contrainte de cisaillement au bras 12. Les contraintes de cisaillement supportées par le tronçon d'extrémité 42 créent ainsi moins de contraintes de cisaillement dans la couche de colle.

Avantageusement, on limite la déformation élastique des tronçons d'extrémité de la traverse 14 suivant une orientation transversale et tout particulièrement les contraintes de cisaillement imputables à la présence de l'ouverture 44 dans la traverse 14.

Grâce aux moyens de retenue, on réduit les problèmes de tenue de la liaison par collage entre les bras 12 et la traverse 14 en matériau composite dans un essieu 10 arrière de véhicule automobile.

En outre, la couche 48 de colle intercalée entre les filets du filetage 46 et du taraudage 40 travaille en traction/compression plutôt qu'en cisaillement.

Suivant une variante non représentée de l'invention, les alésages 34 des bras présentent une forme conique. Les tronçons d'extrémité 42 de la traverse 14 présentent une forme conique, complémentaires des alésages des bras 12 de l'essieu 10. Cette variante permet d'augmenter la force de pression exercée sur l'encollage entre les filetages et les alésages lors de l'assemblage de l'essieu. La liaison est alors renforcée. Une telle variante permet de réduire la déformation en cisaillement transversal de la traverse 14. Cette variante permet également de réduire la possibilité de déplacement en torsion de la traverse 14 en rotation autour de son axe A. En outre, cette variante permet un montage plus facile de la traverse 14 sur le bras 12.

On décrira ci-après, en référence à la figure 5, un deuxième mode de réalisation d'un essieu 10 suivant les enseignements de l'invention.

Le deuxième mode de réalisation sera avantageusement décrit par comparaison avec le premier mode de réalisation de l'essieu 10 représenté aux figures 1 à 4 et décrit précédemment.

Suivant le deuxième mode de réalisation, l'essieu 10 comporte ainsi deux bras 12 reliés par une traverse 14 en matériau composite comportant une ouverture 44 et dont la liaison avec chacun des bras 12 est réalisée par collage.

Tel que représenté sur la figure 5, le bras 12 de support de roue comporte un alésage 34 traversant, qui présente une ouverture 36 sur la face 16 latérale interne du bras 12, et une ouverture 52 sur la face 17 latérale externe du bras 12.

L'ouverture 52 est obtenu à la faveur d'un alésage 34 débouchant permettant notamment au tronçon d'extrémité 42 de la traverse 14 d'être introduit transversalement dans toute la largeur du bras 12.

L'alésage 34 est ici traversant, c'est-à-dire qu'il débouche aussi bien dans la face 16 latérale interne du bras 12 que dans la face 17 latérale externe. Comme dans le premier mode de réalisation, l'alésage 34 comporte aussi un taraudage 40 .

En variante non représentée de l'invention, le taraudage est remplacé par des stries annulaires réalisées dans la face cylindrique intérieure de l'alésage. Ces stries circulaires jouent le même rôle que le taraudage.

Par comparaison au premier mode de réalisation, le tronçon d'extrémité 42 de la traverse 14 ne comporte pas de filetage 46 dans ce deuxième mode de réalisation.

Dans ce deuxième mode de réalisation, les moyens de retenue comportent, outre le taraudage 40, au moins un cylindre 50 d'expansion.

Le cylindre 50 d'expansion est une pièce cylindrique présentant en coupe globalement une forme en « U » illustrée sur la figure 5. Le cylindre 50 présente un diamètre extérieur supérieur au diamètre intérieur du tronçon d'extrémité 42 de la traverse 14 avant sa fixation.

De préférence, le cylindre 50 est une pièce creuse qui comporte respectivement une extrémité 54 fermée et, transversalement à l'opposé, une extrémité 56 ouverte notamment pour faciliter sa manipulation lors du montage.

Le cylindre 50 est emmanché transversalement dans le tronçon d'extrémité 42 de la traverse 14 préalablement emboîté dans le l'alésage 34 de manière à comprimer la face cylindrique extérieure du tronçon d'extrémité 42 de la traverse 14 radialement, contre le taraudage 40 et la couche 48 de colle du bras 12.

Avantageusement, le cylindre 50 est une pièce de plus grande rigidité que l'ensemble formé par la couche 48 de colle et traverse 14. De cette manière, le cylindre 50 est apte à à faire pénétrer le taraudage 40 du bras 12 dans la face cylindrique extérieure du tronçon d'extrémité 42 par déformation de la paroi dudit tronçon d'extrémité.

L'assemblage de la traverse 14 dans les bras 12 sera expliqué dans la suite de la description pour l'un des tronçons d'extrémité 42 de la traverse 14 avec un des bras 12 de l'essieu 10, la description valant à l'identique pour l'autre tronçon d'extrémité en raison de la symétrie de l'essieu 10 selon le plan S.

Le taraudage 40 du bras 12 de support de roue est préalablement encollé.

Optionnellement, le tronçon d'extrémité 42 de la traverse 14 est ensuite chauffé.

L'étape de chauffe permet, selon la composition du matériau composite, de faire baisser la rigidité et la dureté de la traverse 14. La température de chauffe du tronçon d'extrémité 42 de la traverse 14 est définie de manière à permettre, d'une part, l'introduction de la traverse 14 dans l'alésage 34 taraudé du bras 12, et, d'autre part, l'introduction à force du cylindre 50 dans le tronçon d'extrémité 42 de la traverse 14.

Le tronçon d'extrémité 42 chauffé de la traverse 14 est enfoncé dans l'alésage 34 taraudé par l'ouverture 36 de l'alésage 34 située du côté de la face 16 latérale interne du bras 12. De cette manière, le filet du taraudage 40 est en contact avec le tronçon d'extrémité 42 de la traverse 14.

Finalement, le cylindre 50 d'expansion est emmanché transversalement dans le tronçon d'extrémité 42 chauffé de la traverse 14, par l'ouverture 52 de l'alésage 34 qui est située du côté de la face 17 latérale externe du bras 12.

L'emmanchement du cylindre 50 d'expansion permet de comprimer radialement le tronçon d'extrémité 42 de la traverse 14 contre le filet du taraudage 40 du bras 12 de support de roue de manière à renforcer encore le contact entre la traverse 14 et le bras 12.

Le tronçon d'extrémité 42 de la traverse 14 est alors fixé dans le taraudage 40 du bras 12.

Lors du mouvement de torsion de la traverse 14, le filet du taraudage 40 joue le même rôle que dans le premier mode de réalisation. En revanche le taraudage 40 n'agit plus sur un filetage 46 complémentaire mais directement sur des partie déformées du tronçon d'extrémité 42 de la traverse 14.

Les moyens de retenue selon le deuxième mode de réalisation de l'invention permettent, comme dans le premier mode de réalisation, d'empêcher les tronçons d'extrémité 42 de la traverse 14 comportant l'ouverture 44 de vriller suivant une orientation transversale.

Suivant une variante non représentée de ce deuxième mode de réalisation, on réalise un brochage sur l'alésage 34 taraudé du bras 12 avant d'introduire le tronçon d'extrémité 42 chauffé de la traverse 14.

Cette opération de brochage modifie la surface de l'alésage 34 et permet de créer des crans qui participent à améliorer encore la tenue de la liaison par collage de la traverse 14 dans l'alésage 34 du bras 12 de support de roue de l'essieu 10. Les crans sont ici formés par des rainures globalement transversales qui s'étendent à travers les filets du taraudage 40.

L'ajout de crans selon cette variante permet d'obtenir aussi un effet anti-rotation susceptible de s'opposer à un mouvement de rotation de la traverse 14 autour de son axe A lorsque la traverse est soumise à une torsion.

## Revendications

1. Essieu (10) arrière de véhicule automobile comportant :
- deux bras (12) de support des roues, d'orientation longitudinale, qui comportent chacun un alésage (34) ;
- une traverse (14) tubulaire en matériau composite, d'orientation transversale et deux tronçons d'extrémité (42) respectivement fixés par une liaison par collage dans les alésages (34) des bras (12) longitudinaux de support des roues,
**caractérisé en ce que** l'essieu (10) comporte des moyens (40, 46) de retenue pour transmettre un effort de cisaillement transversal produit par la traverse sous l'effet d'une contrainte de torsion jusqu'au bras (12).

2. Essieu (10) suivant la revendication 1, **caractérisé en ce que** les moyens (40, 46) de retenue comportent au moins un taraudage (40) dans chaque alésage (34) des bras (12) de support des roues.

3. Essieu (10) suivant la revendication 2, **caractérisé en ce que** chaque tronçon d'extrémité (42) de la traverse (14) comporte un filetage (46) complémentaire du taraudage (40) du bras (12) de support associé.

4. Essieu (10) suivant la revendication 3, **caractérisé en ce que** le filetage (46) à un tronçon d'extrémité (42) de la traverse (14) présente un pas de sens opposé au filetage (46) que comporte l'autre tronçon d'extrémité (42) de la traverse (14).

5. Essieu (10) suivant l'une quelconque des revendications 3 ou 4, **caractérisé en ce que** les filetages (46) de la traverse (14) et les taraudages (40) complémentaires des bras (12) de support sont coniques.

6. Essieu (10) suivant l'une quelconque des revendications 1 à 5, **caractérisé en ce que** les alésages (34) traversent les bras (12) de support.

7. Essieu (10) suivant l'une quelconque des revendications 1 à 6, **caractérisé en ce que** l'essieu (10) comporte au moins un cylindre (50) d'expansion emmanché dans chaque tronçon d'extrémité (42) de la traverse (14), pour comprimer radialement le tronçon d'extrémité (42) de la traverse (14) contre les moyens (40) de retenue.

8. Essieu (10) suivant l'une quelconque des revendications 1 à 7, **caractérisé en ce que** l'alésage (34) des bras (12) de support est broché de manière à former des crans anti-rotation.

9. Essieu (10) selon l'une quelconque des revendications précédentes, **caractérisé en ce que** la traverse (14) comporte au moins une ouverture (44) d'orientation transversale.

10. Procédé de réalisation d'un essieu (10) suivant la revendication 8, **caractérisé en ce qu'**il comporte au moins les étapes suivantes :
- encoller le taraudage (40) du bras (12) de support de roue ;
- enfoncer le tronçon d'extrémité (42) de la traverse (14) dans l'alésage (34) taraudé ;
- engager le cylindre (50) d'expansion transversalement dans le tronçon d'extrémité (42) de la traverse (14).

11. Procédé selon la revendication précédente, **caractérisé en ce qu'**il comporte une étape consistant à chauffer le tronçon d'extrémité (42) de la traverse (14), cette étape intervenant préalablement à l'étape d'engagement du cylindre (50) d'expansion.

## Patentansprüche

1. Hinterachse (10) eines Kraftfahrzeugs, welche umfasst:
- zwei Tragarme (12) der Räder, mit Längsausrichtung, welche jeweils eine Bohrung (34) umfassen;
- einen rohrförmigen Querträger (14) aus Verbundmaterial, mit Querausrichtung, und zwei Endabschnitte (42), die jeweils durch eine Klebeverbindung in den Bohrungen (34) der längs angeordneten Tragarme (12) der Räder befestigt sind,
**dadurch gekennzeichnet, dass** die Achse (10) Haltemittel (40, 46) zum Übertragen einer in Querrichtung wirkenden Scherkraft, die von dem Querträger unter der Einwirkung einer Torsionsbeanspruchung erzeugt wird, auf den Arm (12) umfasst.

2. Achse (10) nach Anspruch 1, **dadurch gekennzeichnet, dass** die Haltemittel (40, 46) wenigstens ein Innengewinde (40) in jeder Bohrung (34) der Tragarme (12) der Räder umfassen.

3. Achse (10) nach Anspruch 2, **dadurch gekennzeichnet, dass** jeder Endabschnitt (42) des Querträgers (14) ein Gewinde (46) umfasst, das zu dem Innengewinde (40) des zugeordneten Tragarmes (12) komplementär ist.

4. Achse (10) nach Anspruch 3, **dadurch gekennzeichnet, dass** das Gewinde (46) an einem Endabschnitt (42) des Querträgers (14) eine Gangrichtung aufweist, die entgegengesetzt zu derjenigen des Gewindes (46) ist, welches der andere Endabschnitt (42) des Querträgers (14) umfasst.

5. Achse (10) nach einem der Ansprüche 3 oder 4, **dadurch gekennzeichnet, dass** die Gewinde (46) des Querträgers (14) und die komplementären Innengewinde (40) der Tragarme (12) konisch sind.

6. Achse (10) nach einem der Ansprüche 1 bis 5, **dadurch gekennzeichnet, dass** die Bohrungen (34) die Tragarme (12) durchqueren.

7. Achse (10) nach einem der Ansprüche 1 bis 6, **dadurch gekennzeichnet, dass** die Achse (10) wenigstens einen Expansionszylinder (50) aufweist, der in jeden Endabschnitt (42) des Querträgers (14) eingepresst ist, um den Endabschnitt (42) des Querträgers (14) radial gegen die Haltemittel (40) zu drücken.

8. Achse (10) nach einem der Ansprüche 1 bis 7, **dadurch gekennzeichnet, dass** die Bohrung (34) der Tragarme (12) so durch Räumen bearbeitet ist, dass Einkerbungen zur Sicherung gegen Verdrehen ausgebildet sind.

9. Achse (10) nach einem der vorhergehenden Ansprüche, **dadurch gekennzeichnet, dass** der Querträger (14) wenigstens eine quer ausgerichtet Öffnung (44) umfasst.

10. Verfahren zur Herstellung einer Achse (10) gemäß Anspruch 8, **dadurch gekennzeichnet, dass** es wenigstens die folgenden Schritte umfasst:
- Versehen des Innengewindes (40) des Radtragarmes (12) mit Klebstoff;
- Einschrauben des Endabschnitts (42) des Querträgers (14) in die Bohrung (34) mit Innengewinde;
- Einsetzen des Expansionszylinders (50) in Querrichtung in den Endabschnitt (42) des Querträgers (14).

11. Verfahren nach dem vorhergehenden Anspruch, **dadurch gekennzeichnet, dass** es einen Schritt umfasst, der darin besteht, den Endabschnitt (42) des Querträgers (14) zu erhitzen, wobei dieser Schritt vor dem Schritt des Einsetzens des Expansionszylinders (50) ausgeführt wird.

## Claims

1. Rear axle (10) of a motor vehicle comprising:
- two longitudinally-oriented wheel support arms (12) which each comprise a bore (34);
- a transversely-oriented tubular composite material crossmember (14) and two end segments (42) that are respectively secured by means of an adhesive bond in the bores (34) of the longitudinal wheel support arms (12),
**characterized in that** the axle (10) comprises retention means (40, 46) for transmitting a transverse shear load produced by the crossmember under the effect of a torsion load as far as the arm (12) .

2. Axle (10) according to Claim 1, **characterized in that** the retention means (40, 46) comprise at least one tapping (40) in each bore (34) of the wheel support arms (12).

3. Axle (10) according to Claim 2, **characterized in that** each end segment (42) of the crossmember (14) comprises a thread (46) that matches the tapping (40) of the associated support arm (12).

4. Axle (10) according to Claim 3, **characterized in that** the thread (46) at one end segment (42) of the crossmember (14) and the thread (46) of the other end segment (42) of the crossmember (14) have opposite handedness.

5. Axle (10) according to either one of Claims 3 and 4, **characterized in that** the threads (46) of the crossmember (14) and the matching tappings (40) of the support arms (12) are conical.

6. Axle (10) according to any one of Claims 1 to 5, **characterized in that** the bores (34) pass through the support arms (12).

7. Axle (10) according to any one of Claims 1 to 6, **characterized in that** the axle (10) comprises at least one expansion cylinder (50) fitted into each end segment (42) of the crossmember in order to radially compress the end segment (42) of the crossmember (14) against the retention means (40).

8. Axle (10) according to any one of Claims 1 to 7, **characterized in that** the bore (34) of the support arms (12) is broached to as to form rotation prevention notches.

9. Axle (10) according to any one of the preceding claims, **characterized in that** the crossmember (14) comprises at least one transversely-oriented opening (44) .

10. Method for creating an axle (10) according to Claim 8, **characterized in that** it comprises at least the following steps:
- applying adhesive to the tapping (40) of the wheel support arm (12);
- pushing the end segment (42) of the crossmember (14) into the tapped bore (34);
- engaging the expansion cylinder (50) transversely into the end segment (42) of the crossmember (14).

11. Method according to the preceding claim, **characterized in that** it comprises a step of heating the end segment (42) of the crossmember (14), this step being performed prior to the step of engagement of the expansion cylinder (50).
